# EUROPÄISCHE PATENTANMELDUNG

(11) **EP 2 093 523 A2**
(43) Veröffentlichungstag der Anmeldung: **26.08.2009**
(21) Anmeldenummer: 09002112.2
(22) Anmeldetag: 16.02.2009
(51) Int. Cl.: F24J 2/46

(54) **Anordnung und Verfahren zur Reinigung von Solarkollektoren**

(30) Priorität: 21.02.2008 DE 102008010750
(71) Anmelder: Innovent e.V. Technologieentwicklung, 07745 Jena (DE); Engel Oberflächentechnik GmbH, 35415 Pohlheim (DE)
(72) Erfinder: Engel, Thomas, 35415 Pohlheim (DE)
(74) Vertreter: Donath, Dirk

(57) **Zusammenfassung**

Anordnung und Verfahren zur einfachen Reinigung von bereits installierten Solaranlagen, insbesondere Solarkollektoren, wobei die Anordnung zur Reinigung ein Handgerät (1), das über Verbindungsleitungen (3) mit einer tragbaren Versorgungseinheit (2) energie- und medienleitend verbunden ist, umfasst bzw. das Handgerät die Versorgungseinheit direkt umschließt, wobei die Versorgungseinheit (2) eine Strahleinrichtung (21) sowie eine Energie- und Precursorfreisetzungseinrichtung (22) umfasst und durch die Stahleinrichtung (21) ein Reinigungsstrahl generierbar sowie durch die Energie- und Precursorfreisetzungseinrichtung (22) eine nanoporösen slikatischen Konservierung erzeugbar ist.

## Beschreibung

Die Erfindung betrifft eine Anordnung und ein Verfahren zur einfachen Reinigung von bereits installierten Solaranlagen, insbesondere Solarkollektoren für die Solarthermie und Photovoltaik.

Aus DE 10 2005 044 513 A1 ist ein wässriges Reinigungsmittel für harte Oberflächen bekannt, welches mittels eines Sprühspenders in Form eines Schaums auf die zu reinigende Oberfläche aufgetragen wird, wobei der Schaum ein Fettalkoholsulfat und/oder ein Fettsäuresarcosinat sowie Isopropanol und Butylglykol enthält. Das Mittel kann in einem Verfahren zur streifenfreien Reinigung harter Oberflächen, insbesondere Glas, eingesetzt werden.

DE 199 53 457 A1 offenbart ein Verfahren zur Reinigung von Oberflächen (Glas- und insbesondere lackierten, gewachsten oder beschichtete Metall- oder Kunststoffoberflächen) unter Einsatz mechanischer, die Oberfläche zumindest zeitweilig berührende Reinigungsvorrichtungen und einer wässrigen Reinigungsmittelzusammensetzung, enthaltend Antisoiling-Polymere.

In DE 196 52 849 A1 wird ein Verfahren zur Konservierung von Fahrzeugen in automatischen Waschanlagen beschrieben, dass die Schritte (a) Aufbringen einer Emulsion, die hydrophobe Komponenten enthält, auf die Fahrzeugoberfläche, (b) Brechen der Emulsion auf der Fahrzeugoberfläche, wobei die hydrophoben Komponenten der Emulsion auf dem Lack verankert werden, (c) Abwaschen der Fahrzeugoberfläche und (d) Trocknen der Fahrzeugoberfläche umfasst.

DE 44 30 818 A1 offenbart ein Verfahren bei dem man vor dem Nasswaschvorgang eine Emulsion der Zusammensetzung 0,5 bis 10 Gew.-% Wachs oder/und 2,5 bis 15 Gew.-% Silikon, 0,2 bis 10 Gew.-% Emulgator, 0 bis 2 Gew.-% Verdickungsmittel, in einem flüssigen Emulgier- bzw. Dispergiermedium, die gegebenenfalls Additive, wie Duftstoffe, Farbstoffe, UV-absorbierende Mittel, Antistatika und Schleifmittel enthält, auf eine Oberfläche aufbringt und verteilt und danach die Oberfläche einer üblichen Nasswäsche unterwirft und trocknet.

DE 197 00 493 A1 offenbart ein Verfahren zur Reinigung von Oberflächen aus Glas, Graphit, Keramik, polymeren und metallischen Werkstoffen, künstlichen und vegetabilischen Fasern, z. B. Geweben, Textilien oder Altpapier, sowie von Membranoberflächen, durch Ablösen oder Auflösen von organischen und anorganischen Verunreinigungen durch einen einfachen Spülvorgang, wobei eine Lösung, eine Iminocarbonsäure, eine Polyaminosäure, ein Emulgator oder ein Gemisch beider eingesetzt wird.

DE 10 2006 023 020 A1 offenbart ein Verfahren zur Reinigung einer Oberfläche, insbesondere einer Toilettenschüssel, bei dem einen Reinigungsflüssigkeit auf die zu reinigende Oberfläche aufgebracht wird und vorgesehen ist , dass die Oberfläche mittels zumindest eines Ultraschall-Erregers in Schwingung versetzt wird.

Aus DE 197 12 513 A1 sind ein Verfahren und eine Vorrichtung zum Reinigen einer Oberfläche vermittels einer Strahleinrichtung bekannt, bei dem ein Reinigungsstrahl erzeugt wird, der Trockeneispellets und ein Trägermedium enthält. Durch Bewegen der Strahleinrichtung die gesamte Oberfläche gereinigt.

DE 42 37 921 A1 offenbart ein Verfahren zum Modifizieren der Oberflächenaktivität eines Silikatglassubstrates (wie bspw. Hydrophilieren) durch Aufbringen einer siliziumhaltigen Beschichtung unter Verwendung wenigstens einer siliziumorganischen Substanz, wobei die siliziumhaltige Beschichtung durch flammenpyrolytische Zersetzung der siliziumorganischen Substanz(en) als SiOₓ-Beschichtung aufgebracht wird, sowie eine Vorrichtung zur Durchführung eines derartigen Verfahrens.

DE 100 19 926 A1 offenbart ein Verfahren zum Modifizieren einer Oberfläche eines kompakten Substrates mit den Schritten Modifizierung der Oberfläche mit mindestens einer oxidierenden Flamme und Modifizierung der Oberfläche mit mindestens einer silikatisierenden Flamme.

DE 10 2004 019 575 A1 offenbart die Verwendung eines Verfahrens zur Herstellung von optischen SiOₓ(OH)₍₄₋₂ₓ₎-Schichten auf Substraten durch Flammenbeschichtung, wobei von mindestens einer Kohlenwasserstoff- und/oder Wasserstoffflamme ein siliziumhaltiger Precursor thermisch und/oder hydrolytisch mit Hilfe eines Oxydators zersetzt wird und sich direkt aus der Gasphase auf dem Substrat als SiOₓ(OH)₍₄₋₂ₓ₎-Schicht niederschlägt, worin x = 0 bis 2 ist, und die SiOₓ(OH)₍₄₋₂ₓ₎-Schicht einen Rest-Kohlenstoffgehalt von 0 bis 10% aufweist, zur Verbesserung der Lichttransmission und/oder Minderung der Reflexion der beschichteten Substrate.

Aufgabe der vorliegenden Erfindung ist es, eine Anordnung und ein Verfahren zur einfachen Reinigung von bereits installierten Solaranlagen, insbesondere der Solarkollektoren, anzugeben, die aufwandgering realisiert werden können und dabei den ursprünglichen Wirkungsgrad dieser nahezu wiederherzustellen sowie diesen Wirkungsgrad möglichst lange erhalten.

Erfindungsgemäß wird diese Aufgabe durch die kennzeichnenden Merkmale des ersten, fünften und elften Patentanspruchs gelöst. Weitere günstige Ausgestaltungsmöglichkeiten der Erfindung sind in den nachgeordneten Patentansprüchen angegeben.

Das Wesen der Erfindung besteht darin, dass eine bereits installierte Solaranlage, insbesondere ein Solarkollektor, vor Ort mechanisch und/oder chemisch gereinigt und anschließend mit nanoporösem Materialen, wie bspw. Silizium, Aluminium, Zinn, Zirkon oder Titan, im Pyrolyse- oder Hydrolyseprozess oder durch plasmagestützte Umwandlungsprozesse konserviert wird.

Als zwischengeschalteter Verfahrensschritt kann dabei vor der Konservierung ein Trocknen der gereinigten Oberfläche erfolgen.

Durch dieses Verfahren wird der ursprüngliche Wirkungsgrad des Solarkollektors wiederhergestellt und über lange Zeiträume nahezu aufrechterhalten, da eine Antiverschmutzungswirkung durch die Konservierung bewirkt wird.

Die Konservierung des Solarkollektors erfolgt besonders vorteilhaft mittels Silizium, Aluminium, Zinn, Zirkon oder Titan durch Pyrolyse, Hydrolyse oder plasmagestützte Umwandlungsprozesse.

Das erfindungsgemäße Verfahren ist mit einem mobil tragbaren und autark einsetzbaren Handgerät vor Ort an den montierten Solarkollektoren durchführbar, so dass nicht zwingend eine Demontage notwendig ist (die immer mit einer Unterbrechung des Betriebs der Solaranlage verbunden ist).

Das Gerät enthält dazu gemäß der Erfindung eine Strahleinrichtung, durch die im ersten Verfahrensschritt zumindest ein Reinigungsstrahl (flüssiges Reinigungsmittel mit oder ohne Partikelzusatz) erzeugbar ist, sowie eine Energie- und Precursorfreisetzungseinrichtung, durch die im zweiten Verfahrensschritt ein chemischer Umwandlungsprozess zumindest eines Precursor erfolgt.

Um die Haftfestigkeit zu erhöhen, kann vor dem zweiten Schritt noch ein Auftragen eines Haftvermittlers erfolgen.

Die Energie- und Precursorfreisetzungseinrichtung gewährleistet, dass nanoporöses Material haftfest auf dem Solarkollektor abscheidbar sind.

Das erfindungsgemäße Handgerät, welches freibeweglich und manuell über einen Solarkollektor führbar ist, steht über Verbindungsleitungen mit einer tragbaren Versorgungseinheit, welche flüssiges Reinigungsmittel mit oder ohne Partikelzusatz, alle Precursor- und Energievorräte sowie die Steuerelektronik umfasst, energie- und medienleitend in Verbindung.

Alternativ dazu kann das Handgerät selbst die genannte Versorgungseinheit in einer kompakten Bauform umfassen, in dem die Versorgungseinheit integraler Bestandteil der Anordnung ist. Diese erfindungsgemäße kleine Ausführungsform ist leicht handhabbar und besonders für kleinere Reinignngsaufgaben geeignet.

Im Rahmen der Erfindung liegt auch, dass die beiden zuvor stehend genannten Anordnungen als stationäre Ausführungsformen in der Art und Weise ausgeführt sind, dass demontierte Solarkollektoren auf einer Fördervorrichtung wie in einer Wasch-Strasse an den Anordnungen vorbei geführt werden, so dass das erfindungs gemäße Verfahren nicht vor Ort durchführbar ist. Dies hat den Vorteil, dass die überschüssigen Wasch- und Konservierungsmittel gezielt auffangbar sind und die Solarkollektoren durch technische Hilfsmittel (bspw. Luftgebläse) nach dem ersten Verfahrensschritt trockenbar sind, was den Ablauf des gesamten Verfahrens beschleunigen kann. Die Demontage der Sollarkollektoren führt jedoch bei dieser Vorgehensweise dazu, dass die Energieerzeugung unterbrochen werden muss, so dass diese Art der Reinigung in den Nachtstunden erfolgen muss, wobei die Demontage am Abend und die Montage am Morgen durchzuführen ist.

Der Vorteil des erfindungsgemäßen Verfahrens sowie der erfindungsgemäßen Anordnung gegenüber den bisher bekannten Reinigungsverfahren besteht darin, dass in Folge deren bestimmungsgemäßen Verwendung der Wirkungsgrad von Solarkollektoren über lange Zeiträume durch eine geringere Verschmutzung auf Grund des Selbstreinigungseffektes (welcher durch die nanoporöse slikatische Konservierung aufrecht erhalten wird, so dass über längere Zeiträume kein Abfallen der Leitungsfähigkeit der Solarkollektoren zu verzeichnen ist.

Das erfindungsgemäße Verfahren sowie die erfindungsgemäße Anordnung sind flexibel auf alle installierten Solaranlagen, insbesondere deren Kollektoren, anwendbar, ohne dass es zwingend einer Demontage und signifikanten Unterbrechung der Energieerzeugung bedarf.

Die erfindungsgemäße Anordnung wird nachstehend an Hand der Figuren und der beiden Ausführungsbeispiele erläutert, ohne durch diese darauf beschränkt zu werden. Es zeigen:
- Fig. 1:: eine Ausführungsform der erfindungsgemäßen Anordnung und
- Fig. 2:: eine weitere eine Ausführungsform der erfindungsgemäßen Anordnung.

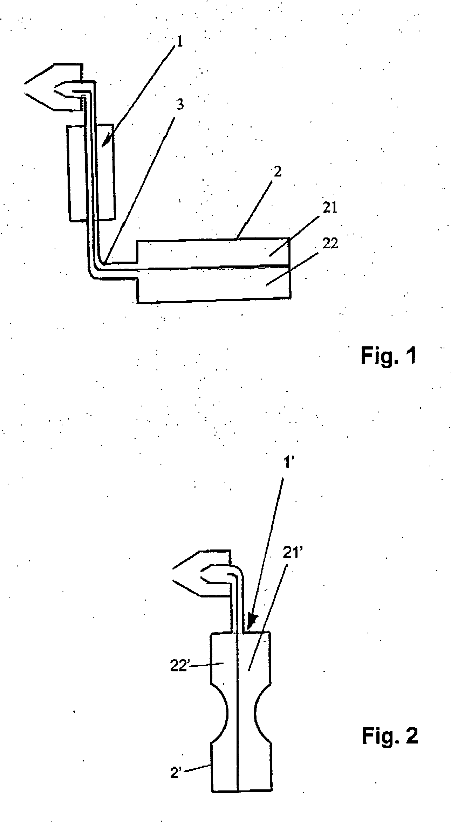

Die in Fig. 1 dargestellte erste Ausführungsform der Anordnung umfasst ein Handgerät (1), das über Verbindungsleitungen (3) mit einer tragbaren Versorgungseinheit (2) energie- und medienleitend verbunden ist, wobei die Versorgungseinheit (2) eine Strahleinrichtung (21) sowie eine Energie- und Precursorfreisetzungseinrichtung (22) umfasst.

Im Betriebszustand der Anordnung ist durch die Strahleinrichtung (21) ein Reinigungsstrahl generierbar und durch die Energie- und Precursorfreisetzungseinrichtung (22) eine nanoporöse Konservierung erzeugbar.

Die in Fig. 2 dargestellte zweite Ausführungsform der Anordnung ist ein Handgerät (1'), das die Versorgungseinheit (2') in einer kompakten Bauform umschließt, so dass diese integraler Bestandteil des Handgeräts (1'), wobei die Versorgungseinheit (2) eine Strahleinrichtung (21') sowie eine Energie- und Precursorfreisetzungseinrichtung (22') umfasst.

Im Betriebszustand der Anordnung ist durch die Strahleinrichtung (21') ein Reinigungsstrahl generierbar und durch die Energie- und Precursorfreisetzungseinrichtung (22') eine nanoporöse Konservierung erzeugbar.

Unter Verwendung der Anordnung gemäß Fig. 1 oder Fig. 2 ist ein Verfahren zur Reinigung von Solarkollektoren durchführbar, dass mindestens die Verfahrensschritte:
a) mechanisches und/oder chemisches Reinigen der Oberfläche der Solarkollektoren durch zumindest einen Reinigungsstrahl sowie
b) Behandlung der Oberfläche der Solarkollektoren mit Silizium, Aluminium, Zinn, Zirkon oder Titan im Pyrolyse- oder Hydrolyseprozess oder durch plasmagestützte Umwandlungsprozesse zur Erzeugung einer nanoporösen Konservierung, umfasst.

Dabei kann ein Trocknen der Oberfläche der Solarkollektoren und / oder das Auftragen eines Haftvermittlers zwischen den Verfahrensschritten a) und b) erfolgen.

Die zuvor stehend genannten Verfahrensschritte sind an nicht demontierten, aber auch an demontierten Solarkollektoren durchführbar.

Im Rahmen der Erfindung liegt auch, dass die Anordnung dabei über die Solarkollektoren bewegt wird bzw. dass die Solarkollektoren an der Anordnung vorbei bewegt werden.

Die vermittels der erfindungsgemäßen Anordnung und dem erfindungsgemäßen Verfahren erzeugte nanoporöse Konservierung hat den Vorteil, dass sie eine Antiverschmutzwirkung aufweist.

Alle in der Beschreibung, den Ausführungsbeispielen und den nachfolgenden Ansprüchen dargestellten Merkmale können sowohl einzeln als auch in beliebiger Kombination miteinander erfindungswesentlich sein.

### Bezugszeichenliste

| | | |
|---|---|---|
| 1; 1' | - | Handgerät |
| 2; 2' | - | Versorgungseinheit |
| 3 | - | Verbindungsleitungen |
| 21; 21' | - | Strahleinrichtung |
| 22; 22' | - | Energie- und Precursorfreisetzungseinrichtung |

## Patentansprüche

1. Anordnung zur Reinigung von Solarkollektoren umfassend ein Handgerät (1), das über Verbindungsleitungen (3) mit einer tragbaren Versorgungseinheit (2) energie- und medienleitend verbunden ist, wobei die Versorgungseinheit (2) eine Strahleinrichtung (21) sowie eine Energie- und Precursorfreisetzungseinrichtung (22) umfasst und durch die Strahleinrichtung (21) ein Reinigungsstrahl generierbar sowie durch die Energie- und Precursorfreisetzungseinrichtung (22) eine nanoporösen slikatischen Konservierung erzeugbar ist.

2. Anordnung zur Reinigung von Solarkollektoren umfassend ein Handgerät (1'), das eine Versorgungseinheit (2') in sich trägt, wobei die Versorgungseinheit (2) eine Strahleinrichtung (21') sowie eine Energie- und Precursorfreisetzungseinrichtung (22') umfasst und durch die Strahleinrichtung (21) ein Reinigungsstrahl generierbar sowie durch die Energie- und Precursorfreisetzungseinrichtung (22) eine nanoporösen slikatischen Konservierung erzeugbar ist.

3. Anordnung zur Reinigung von Solarkollektoren gemäß Anspruch 1 oder 2, **dadurch gekennzeichnet, dass** die Anordnung eine Trocknungseinrichtung in Form eines Gebläses aufweist.

4. Anordnung zur Reinigung von Solarkollektoren gemäß Anspruch 1 oder 2, **dadurch gekennzeichnet, dass** die Anordnung tragbar ist oder stationär als Waschstraße ausgebildet ist.

5. Verfahren zur Reinigung von Solarkollektoren unter Verwendung einer Anordnung gemäß Anspruch 1 oder 2 umfassend mindestens die Verfahrensschritte:
a) mechanisches und/oder chemisches Reinigen der Oberfläche der Solarkollektoren durch zumindest einen Reinigungsstrahl sowie
b) Behandlung der Oberfläche der Solarkollektoren mit Silizium, Aluminium, Zinn, Zirkon oder Titan im Pyrolyse- oder Hydrolyseprozess oder durch plasmagestützte Umwandlungsprozesse zur Erzeugung einer nanoporöse slikatische Konservierung.

6. Verfahren zur Reinigung von Solarkollektoren gemäß Anspruch 5, **dadurch gekennzeichnet, dass** ein Trocknen der Oberfläche der Solarkollektoren zwischen den Verfahrensschritten a) und b) erfolgt.

7. Verfahren zur Reinigung von Solarkollektoren gemäß Anspruch 5 oder 6, **dadurch gekennzeichnet, dass** die Anordnung über die Solarkollektoren bewegt wird.

8. Verfahren zur Reinigung von Solarkollektoren gemäß Anspruch 5 oder 6, **dadurch gekennzeichnet, dass** die Solarkollektoren an der Anordnung vorbei bewegt werden.

9. Verfahren zur Reinigung von Solarkollektoren gemäß Anspruch 5 oder 6, **dadurch gekennzeichnet, dass** die Strahleinrichtung (21) einen Reinigungsstrahl generiert und die Energie- und Precursorfreisetzungseinrichtung (22) eine nanoporöse slikatische Konservierung erzeugt.

10. Verfahren zur Reinigung von Solarkollektoren gemäß Anspruch 5 oder 6, **dadurch gekennzeichnet, dass** die Strahleinrichtung (21') einen Reinigungsstrahl generiert und die Energie- und Precursorfreisetzungseinrichtung (22') eine nanoporösen slikatischen Konservierung erzeugt.
